# EUROPÄISCHE PATENTSCHRIFT

(11) **EP 0 874 095 B1**
(45) Veröffentlichungstag und Bekanntmachung des Hinweises auf die Patenterteilung: **03.03.2004**
(21) Anmeldenummer: 98201181.9
(22) Anmeldetag: 14.04.1998
(51) Int. Cl.: E04C 2/54, B29C 47/20

(54) **Plattenförmiges Wand- oder Dachelement sowie Verfahren und Vorrichtung zu dessen Herstellung**
Slab shaped element for walls or roofs and procedure and device for making the same
Panneau pour des murs et des toits et procedé et dispositif de production

(30) Priorität: 23.04.1997 DE 19717095; 08.07.1997 DE 19729093
(43) Veröffentlichungstag der Anmeldung: 28.10.1998
(73) Patentinhaber: Rodeca GmbH, 45483 Mülheim-Ruhr (DE)
(72) Erfinder: Conterno, Alexander, Dr., 45468 Mülheim-Ruhr (DE); Schneider, Rolf, 45478 Mülheim-Ruhr (DE)
(74) Vertreter: Ackmann, Günther, Dr.-Ing.

(56) Entgegenhaltungen:
- EP-A- 0 110 221
- DE-A- 3 011 905
- DE-A- 3 434 413
- DE-A- 3 542 244
- DE-A- 4 435 958
- FR-A- 1 485 237
- GB-A- 2 028 228
- US-A- 4 569 875
- US-A- 5 298 310

## Beschreibung

Die Erfindung betrifft ein Verfahren zur Herstellung eines plattenförmigen Wand- oder Dachelementes aus stranggepreßtem, insbesondere lichtdurchlässigem Kunststoff, das aus wenigstens zwei mit Abstand zueinander angeordneten und durch Querstege miteinander verbundenen Platten besteht, wobei beim Strangpressen durch Koextrusion die Außen- und/oder Innenfläche wenigstens einer Platte mit einer streifenförmigen dünnen Beschichtung aus einer Kunststoffmasse beschichtet wird. Weiterhin befasst sich die Erfindung mit einem Werkzeug zur Herstellung der Wand- oder Dachelemente.

Wand- oder Dachelemente dieser Art finden insbesondere für den Hallenbau, beispielsweise Turnhallen, Industriegebäude u.dgl. Verwendung. Solche Wandelemente können dabei in beliebigen Höhen oder Breiten vorgesehen sein, wobei sie an Gebäuderahmen, Riegeln u.dgl. befestigt sind. In der Regel werden die plattenförmigen Wandelemente aus lichtdurchlässigem Kunststoff gefertigt. Dies hat den Nachteil, daß bei starker Sonneneinwirkung eine grelle Lichteinwirkung und ein erheblicher Wärmestau in den Räumen erfolgt. Um dem entgegenzuwirken, sind Wand- oder Dachelemente bekannt, die auf ihrer Außenfläche ganzflächig mit einer dünnen Beschichtung aus einem Kunststoff versehen sind, der UV-Licht oder Infrarot-Licht absorbierende Partikel, z.B. aus Aluminium enthält. Eine grelle Lichteinwirkung durch Sonne läßt sich hierdurch nicht verhindern. Für eine Verringerung des Lichteinfalls ist es bekannt, die Platten mit einem Farbdruck zu versehen, der auf das fertige Wand- oder Dachelement mittels einer Farbträgerfolie aufgedruckt wird (vgl. z.B. EP 0 544 925 B1), wobei der Farbaufdruck auch streifenförmig sein kann und zugleich der architektonischen Fassadengestaltung dient. Für ein solches Druckverfahren wird eine zusätzliche Druckeinrichtung in einem weiteren Arbeitsschritt benötigt, die sehr aufwendig und teuer ist.

Aus der Offenlegungsschrift DE 44 35 958 A1 ist eine Lichtblende bekannt, die zur Beeinflussung der Lichtdurchlässigkeit mit lichtreflektierenden Feldern in Form von Streifen versehen ist. Die lichtreflektierenden Feldern werden durch eine Beschichtung erzeugt, die über einen Kleber auf der transparenten Trägerschicht gehalten wird.

Aus der Offenlegungsschrift 30 11 905 A1 ist ferner eine Fensterscheibe bekannt, bei der mehrere Rippen verwendet werden, die zum Teil für Sonnenstrahlen undurchlässig ausgebildet sind. Hierbei ist vorgesehen, dass die Rippen zueinander in geometrischer Beziehung stehen, damit die Sonnenstrahlen in Abhängigkeit der Sonnenhöhe in das Gebäude eindringen oder daran gehindert werden. Die Rippen werden zusammen mit der inneren und äußeren Schale durch Koextrusion hergestellt.

Aus der europäischen Offenlegungsschrift EP 0 110 221 A2 ist ferner eine Polycarbonat-Kunststofftafel bekannt, die durchgehende Hohlräume aufweist und eine Kernschicht aus Polycarbonatkunststoff die nicht mehr als 0,5 Gew.-% eines UV-Absorbers enthält und auf wenigstens einer Seite der Kemschicht eine UV-absorbierende Deckschicht trägt. Die Deckschicht wird hierbei durch Koextrusion der Kernschicht mit einer Deckschicht aus Polycarbonatkunststoff, der wenigstens 3 Gew.-% eines UV-Absorbers enthält, erzeugt.

Aus der DE 34 34 413 A1 ist eine Abdeckung insbesondere für Gewächshäuser bekannt, um die Sonnen- oder Wärmeeinstrahlung zu beeinflussen. Hierbei ist vorgesehen, dass die verwendeten Abdeckelemente, die Hohlkammern bilden und aus einem durchsichtigen oder durchscheinenden Werkstoff bestehen, mit Flächenelementen ausgestattet werden, wobei die Flächenelemente in den jeweiligen Hohlkammerquerschnitt einschiebbar sind und diese in zwei Einzelkammern unterteilen. Die Flächenelemente werden aus einem Werkstoff hergestellt, der phototrope ist, dass heißt IR-Strahlung bis zu 90% absorbierende Partikel, zum Beispiel organische Salze enthält.

Aus dem US-Patent 4,569,875 ist ein mehrlagiges Paneel sowie ein Verfahren zur Herstellung bekannt, wobei eine Werkzeug zur Herstellung der äußeren Schalen eingesetzt wird.

Aus dem US-Patent 5,298,310 ist im Weiteren ein Werkzeug mit Beschichtungsdüsen bekannt, mit denen auch mehrere Streifen nachträglich aufgetragen werden können. Aus der französischen Patentschrift 1,485,237 ist im weiteren ein Werkzeug und ein plattenförmiges Wand- oder Dachelement bekannt, bei dem einzelne Stege in einer anderen Kunststoffmasse ausgeführt sind. Hierzu wird ein Werkzeug verwendet, welches die Zuführung zweier getrennter Kunststoffmassen ermöglicht, die im Mundstück miteinander vermischt werden oder für die mittleren Stegabschnitte eine getrennte Zuführung aufweisen.

Die aus dem Stand der Technik bekannten Maßnahme zur Reduzierung der Sonneneinstrahlung beruhen entweder darauf, dass zusätzliche Materialien in einem Koextrusionsverfahren in den Zwischenräumen der Hohlkammerscheiben angeordnet werden oder aber diese nachträglich durch einschiebbare Stege erzeugt werden. Soweit eine äußere streifenförmige Beschichtung erfolgt, wird diese erst nach Herstellung der Wand- oder Dachelemente aufgebracht, sodass erhebliche Mehrkosten entstehen.

Demgegenüber liegt der Erfindung die Aufgabe zugrunde, ein Verfahren aufzuzeigen, mit dem Wand- oder Dachelemente in einem Arbeitsgang herstellbar sind, die gegenüber den gattungsgemäßen Produkten eine zusätzliche Oberflächengestaltung aufweisen.

Diese Aufgabe wird durch das Verfahren nach Anspruch 1 gelöst. Ein geeignetes Verfahren zur Herstellung solcher Wand- oder Dachelemente sieht vor, daß beim Strangpressen die Außen- und/oder Innenfläche wenigstens einer Platte durch Koextrusion mit einer streifenförmigen dünnen Beschichtung aus einer eingefärbten oder einer mit UV-Licht oder Infrarot-Licht absorbierenden Partikeln versetzten Kunststoffmasse beschichtet wird. Beim Strangpressen durch Koextrusion können auch die Flächen der Querstege mit einer dünnen Beschichtung aus einer eingefärbten oder einer mit UV-Licht oder Infrarot-Licht absorbierenden Kunststoffmasse beschichtet werden, oder es ist möglich, die Querstege aus einer eingefärbten oder einer mit UV-Licht oder Infrarot-Licht absorbierenden Kunststoffmasse zu formen.

Für das Herstellungsverfahren ist ein Werkzeug für eine Strangpresse zu gebrauchen, dessen Mundstück ein dem Querschnitt des Wand- oder Dachelements entsprechendes Hohlprofil aufweist und mit zusätzlichen Beschichtungsdüsen versehen ist, welche derart in das Hohlprofil münden, daß die zugeführte Kunststoffmasse in mehreren parallelen Streifen auf die Außenund/oder Innenfläche des Preßstrangs dünn aufgetragen wird.

Für eine solche Ausgestaltung kann ein vor dem Mundstück angebrachtes Kopfstück mit einem dem Wand- oder Dachelement entsprechenden Hohlprofil und mit nebeneineranderliegenden, in das Profil mündenden Beschichtungsdüsen versehen sein. Alternativ können die Beschichtungsdüsen und Verteilungskanäle unmittelbarer Bestandteil des Mundstücks sein.

In vorteilhafter Weise wird die Beschichtung unmittelbar durch Koextrusion beim Strangpressen des Wand- oder Dachelementes angeformt. Sie kann je nach der gewünschten Wirkung aus einer eingefärbten Kunststoffmasse oder einer Kunststoffmasse bestehen, die entweder mit UV-Licht oder mit Infrarot-Licht absorbierenden Partikeln versetzt ist. Es ist auch möglich, zugleich Farbstreifen und UV-Licht oder Infrarot-Licht absorbierende Streifen in beliebiger Folge parallel zueinander auf der Außen- und/oder Innenfläche der Platten aufzuformen. Ebenso lassen sich Wand- und Dachplatten herstellen, die für architektonische Zwecke nur Farbstreifen aufweisen. Auch bei einer Kombination von Farbstreifen und UV-Licht oder Infrarot-Licht absorbierenden Streifen ist eine vielfältige Gestaltung mit verschiedenen Farben und lichtdurchlässigen Streifen möglich, wobei die lichtdurchlässigen oder lichtundurchlässigen Streifen bedarfsweise mit UV-Licht und/oder Infrarot-Licht absorbierenden Kunststoffmassen beschichtet sein können. Beispielsweise können abwechselnd nebeneinander streifenförmige Beschichtungen aus einer eingefärbten Kunststoffmasse bzw. einer UV-Licht oder Infrarot-Licht absorbierenden Kunststoffmasse aufgetragen sein. Oder es ist möglich, die eingefärbten streifenförmigen Beschichtungen auf zwei durch Querstege verbundenen Platten um eine Streifenbreite versetzt anzuordnen. Auch können die Flächen der Querstege mit einer dünnen Beschichtung aus einer eingefärbten oder einer mit UV-Licht oder Infrarot-Licht absorbierenden Partikeln versetzten Kunststoffmasse versehen sein, oder die Querstege können aus einer eingefärbten oder einer mit UV-Licht oder Infrarot-Licht absorbierenden Partikeln versetzten Kunststoffmasse bestehen.

Der Gegenstand der Erfindung ist in mehreren Ausführungsbeispielen in der Zeichnung dargestellt.

Es zeigt
- Fig. 1: einen Abschnitt eines Wand- oder Dachelements in perspektivischer Ansicht,
- Fig. 2: ein zweites Ausführungsbeispiel eines Wand- oder Dachelements in einem Querschnitt,
- Fig. 3: ein drittes Ausführungsbeispiel eines Wand- oder Dachelements in einem Querschnitt,
- Fig. 4: das Mundstück für eine Strangpresse in einem Längsschnitt und
- Fig. 5: ein Teil des Gegenstandes der Fig. 4 in einem Schnitt nach Linie I - I.

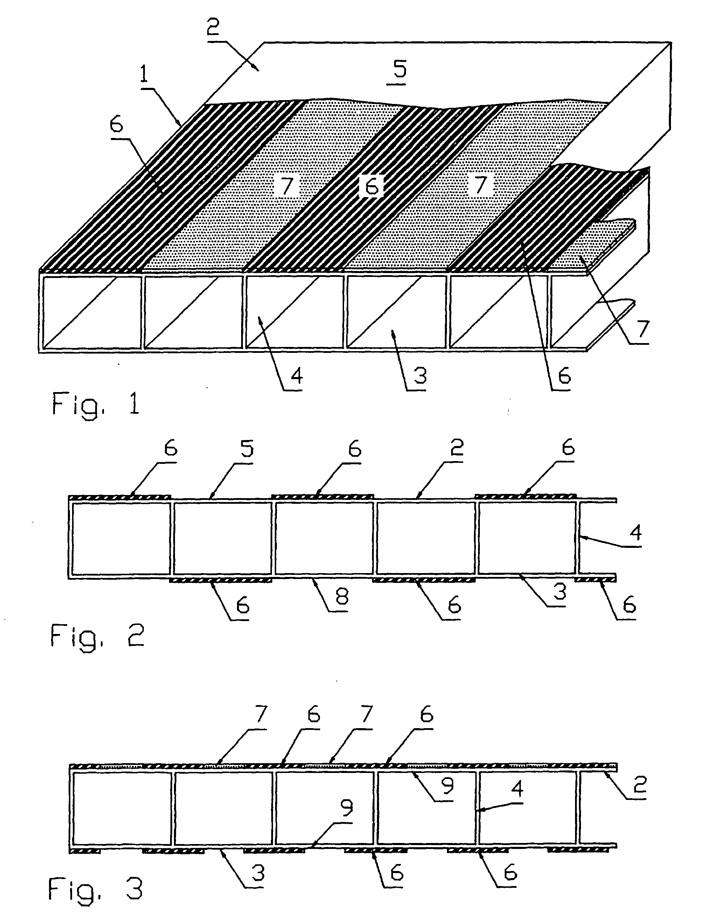

Das Wand- oder Dachelement 1 nach Fig. 1 besteht aus zwei Platten 2,3, die durch Querstege 4 verbunden sind. Sie sind durch Strangpressen aus Kunststoff, z.B. Polycarbonat hergestellt. Bei dieser Ausführung sind auf der Außenfläche 5 der oberen Platte 2 abwechselnd dünne streifenförmige Beschichtungen 6 aus eingefärbter Kunststoffmasse und dünne streifenförmige Beschichtungen 7 aus einer mit UV-Licht oder Infrarot-Licht absorbierenden Partikeln versetzten Kunststoffmasse beim Extrudieren an- bzw. aufgeformt. Die Dicke der Beschichtungen 6,7 beträgt beispielsweise 50 µm, doch sind auch andere Dicken geeignet. Die streifenförmigen Beschichtungen 6,7 verlaufen parallel und liegen bei der Ausführung nach Fig. 1 abwechselnd nebeneinander, wobei die Stoßlinien über den Querstegen 4 verlaufen und die Dikke der Streifen 6,7 den Abstand zwischen zwei Querstegen 4 entspricht. Die streifenförmigen Beschichtungen 6 können eine einheitliche Farbe oder unterschiedliche Farben aufweisen. Die UV-Licht oder Infrarot-Licht absorbierenden streifenförmigen Beschichtungen 7 sehen in der Regel transparent oder matt aus und lassen das sichtbare Licht durch.

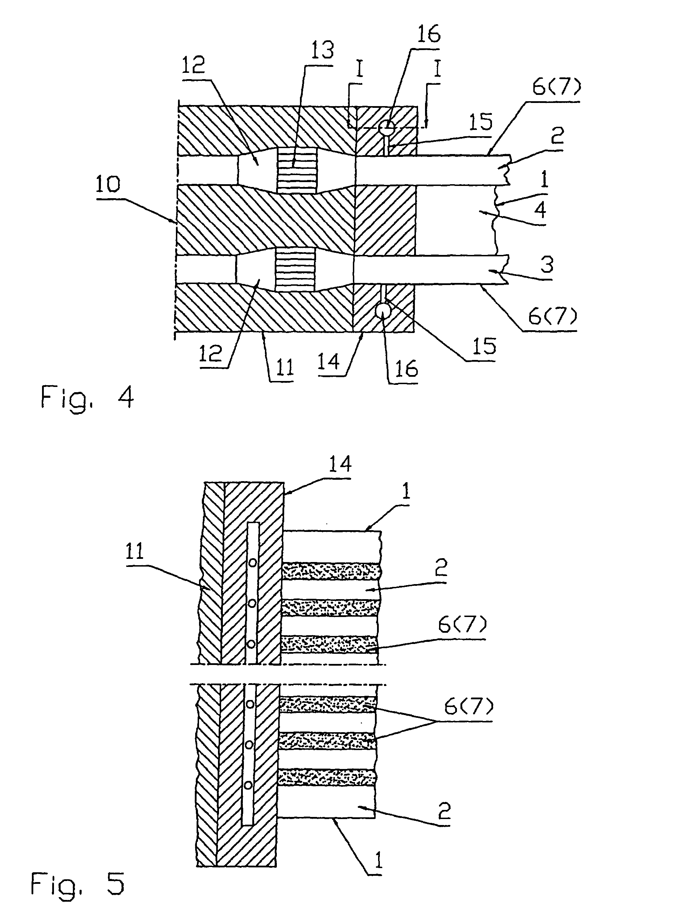

Bei der Ausführung nach Fig. 2 sind auf der Außenfläche 5 bzw. 8 der oberen bzw. unteren Platte 2 bzw. 3 streifenförmige Beschichtungen 6 nur aus eingefärbter Kunststoffmasse angebracht, die jeweils um eine Streifenbreite versetzt liegen. Eine weitere Variante zeigt Fig. 3, bei der die Außenfläche 5 der oberen Platte 1 abwechselnd streifenförmige Beschichtungen 6,7 aus eingefärbter Kunststoffmasse bzw. aus UV-Licht oder Infrarot-Licht absorbierender Kunststoffmasse aufweist, wobei die Streifenbreite etwa den halben Abstand zwischen zwei Querstegen 4 entsprechen. Auf der Außenfläche 8 der unteren Platte 3 hingegen sind nur streifenförmige Beschichtungen 6 vorgesehen, die genau unter den oberen eingefärbten Beschichtungen 6 liegen.

Alternativ können die streifenförmigen Beschichtungen 6,7 schmaler sein oder sich nahezu flächenhaft über mehrere Querstege 4 erstrecken, je nachdem wie es die Lichtverhältnisse oder architektonische Wünsche verlangen. Sie können bedarfsweise auch an den Innenflächen 9 der Platten 2,3 oder den Querstegen 4 angebracht sein. Ebenso können die Querstege 4 auch vollständig aus eingefärbter Kunststoffmasse geformt sein. Weiterhin können die Streifen auch Wandoder Dachelementen mit drei oder mehr durch Querstege verbundene Platten zugeordnet sein. Die streifenförmige Beschichtung ist schließlich auch für Wand- oder Dachelemente mit schräg zu den Platten verlaufenden Querstegen geeignet, ebenso aber auch für massive Platten ohne Stege.

Die Beschichtungen 6,7 werden unmittelbar beim Extrudieren des Wand- oder Dachelementes 1 an- bzw. aufgeformt. Hierfür kann beispielsweise das in Fig. 4 und 5 gezeigte Werkzeug 10 für eine Strangpresse Anwendung finden. Das dem Werkzeug 10 gehörige Mundstück 11 ist mit einem dem Querschnitt des Wand- oder Dachelements 1 entsprechenden Hohlprofil 12 versehen, in dem die Kunststoffmasse glättende Leitplatten 13 angeordnet sind. Vor diesem üblichen Mundstück 12 ist ein zusätzliches Kopfstück 14 angebracht, das mit kanälen ausgestattet ist. Diese bestehen aus Beschichtungsdüsen 15, in welche über einen Verteilungskanal 16 eingefärbte Kunststoffmasse oder eine UV-Licht oder Infrarot-Licht absorbierende Kunststoffmasse gefördert wird. Mehrere solcher Beschichtungsdüsen 15 sind nebeneinander im Mundstück 12 angeordnet. Sie münden derart in das Hohlprofil, daß die zugeführte Kunststoffmasse in mehreren parallelen Streifen auf die Außenund/oder Innenfläche des Preßstrangs dünn aufgetragen wird. Das Mundstück 11 weist eine den vorbestimmten Streifen entsprechende Anzahl Beschichtungsdüsen 15 auf. Beim Strangpressen wird im Mundstück 11 zunächst ein Strang mit einem dem Hohlprofil 12 entsprechenden Profil gebildet. Auf deren Außen- und Innenflächen wird dann die eingefärbte oder mit UV-Licht oder Infrarot-Licht absorbierenden Partikeln versehene Kunststoffmasse an den Einmündungen der Beschichtungsdüsen 15 aufgetragen. Die Dicke und Breite dieser Beschichtung läßt sich durch den Preßdruck steuern. Sind nebeneinander abwechselnd verschiedene Streifenbeschichtungen vorgesehen, können zwei Kanalsysteme vorgesehen sein, wobei die beiden Verteilungskanäle 16 nebeneinander liegen können und deren Beschichtungsdüsen 15 schräg in das Hohlprofil 12 münden.

Anstelle eines zusätzlichen Kopfstücks 14 können die Beschichtungsdüsen 15 und Verteilungskanäle 16 auch unmittelbarer Bestandteil des Mundstücks 11 sein.

## Patentansprüche

1. Verfahren zur Herstellung eines plattenförmigen Wand- oder Dachelementes (1) aus stranggepreßtem, insbesondere lichtdurchlässigem Kunststoff, das aus wenigstens zwei mit Abstand zueinander angeordneten und durch Querstege (4) miteinander verbundenen Platten (2, 3) besteht, wobei beim Strangpressen durch Koextrusion die Außen- und/oder Innenfläche (5,8,9) wenigstens einer Platte (2,3) mit einer streifenförmigen dünnen Beschichtung (6,7) aus einer Kunststoffmasse beschichtet wird,
**dadurch gekennzeichnet,**
**dass** nach der Ausformung des Wand- oder Dachelementes (1) in einem Mundstück (11) die Kunststoffmasse für die streifenförmige dünne Beschichtung (6, 7) über ein Mundstück (11) oder Kopfstück (14) zugeführt und durch Beschichtungsdüsen (15) unmittelbar auf die Außen- oder Innenflächen (5, 8, 9) aufgetragen wird, wobei die Kunststoffmasse eingefärbt oder mit UV-Licht oder Infrarot-Licht absorbierenden Partikeln versetzt ist.

2. Verfahren nach Anspruch 1
**dadurch gekennzeichnet,**
**dass** beim Strangpressen durch Koextrusion die Flächen der Querstege (4) mit einer dünnen Beschichtung (6, 7) aus einer eingefärbten oder einer mit UV-Licht oder Infrarot-Licht absorbierenden Kunststoffmasse beschichtet werden.

3. Verfahren nach Anspruch 1
**dadurch gekennzeichnet,**
**dass** beim Strangpressen durch Koextrusion die Querstege (4) aus einer eingefärbten oder einer UV-Licht oder Infrarot-Licht absorbierenden Kunststoffmasse geformt werden.

4. Verfahren nach Anspruch 2 oder 3,
**dadurch gekennzeichnet,**
**dass** die streifenförmigen Beschichtungen (6,7) abwechselnd nebeneinander liegend aus einer eingefärbten Kunststoffmasse bzw. einer UV-Licht oder Infrarot-Licht absorbierenden Kunststoffmasse hergestellt werden.

5. Verfahren nach Anspruch 2 oder 3,
**dadurch gekennzeichnet,**
**dass** die eingefärbten streifenförmigen Beschichtungen (6,7) auf zwei durch Querstege (4) verbundenen Platten (2,3) um eine Streifenbreite versetzt angeordnet werden.

6. Werkzeug (10) zur Anwendung des Verfahrens nach einem der Ansprüche 1 bis 5, für eine Strangpresse zur Herstellung eines Wand- oder Dachelements (1) aus Kunststoff, das aus wenigsten zwei mit Abstand zueinander angeordneten und durch Querstege miteinander verbundenen Platten besteht, wobei das Mundstück (11) ein dem Querschnitt des Wand- oder Dachelements (1) entsprechendes Hohlprofil (12) aufweist,
**dadurch gekennzeichnet,**
**daß** das Werkzeug (10) mit zusätzlichen Beschichtungsdüsen (15) versehen ist, welche derart in das Hohlprofil münden, dass die zugeführte Kunststoffmasse in mehreren parallelen Streifen auf die Außen- und/oder Innenfläche des Preßstrangs dünn auftragbar ist.

7. Werkzeug nach Anspruch 6,
**dadurch gekennzeichnet,**
**dass** ein vor dem Mundstück (11) angebrachtes Kopfstück (14) mit einem dem Wand- oder Dachelement (1) entsprechenden Hohlprofil (12) und mit nebeneinanderliegenden, in das Profil mündenden Beschichtungsdüsen (15) und Verteilungskanälen (16) versehen ist.

8. Werkzeug nach Anspruch 6,
**dadurch gekennzeichnet,**
**dass** die Beschichtungsdüsen (15) und die Verteilungskanäle (16) unmittelbar Bestandteil des Mundstückes (11) sind.

## Claims

1. Process for the production of plate-shaped wall or roof elements (1) which are made of extruded, in particular transparent plastic material and comprise at least of two panels (2, 3) arranged at a distance from each other and interconnected by transverse webs (4), the outer and/or inner surface (5, 8, 9) of at least one panel (2, 3) thinly covered with a stripe-shaped plastic material coating (6, 7) applied by coextrusion during the extrusion process,
**characterised**
**in that** after the shaping of the wall or roof element (1) in a nozzle (11), the plastic material to form the stripe-shaped thin coating (6, 7) passes through a nozzle (11) or end piece (14) and is applied through coating orifices (15) directly to the outer or inner surface (5, 8, 9), the coating material may be dyed or may contain UV light or infrared light absorbing particles.

2. Process in accordance with claim 1,
**characterised**
**in that** the surfaces of the transverse webs (4) are coated by coextrusion during the extrusion process with a thin coating (6, 7) of a dyed or UV light absorbing or infrared light absorbing particle containing plastic material.

3. Process in accordance with claim 1,
**characterised**
**in that** the transverse webs (4) are moulded of a dyed or UV light or infrared light absorbing plastic material by coextrusion during the panel extrusion process.

4. Process in accordance with claims 2 or 3,
**characterised**
**in that** the stripe-shaped coatings (6, 7) are made either of dyed plastic material or of UV light or infrared light absorbing plastic material, the two types of stripes coating the panel in alternating arrangement.

5. Process in accordance with claims 2 or 3,
**characterised**
**in that** the dyed stripe-shaped coatings (6, 7) are staggered on two web (4) connected panels (2, 3) at intervals of one stripe width between them.

6. Tool (10) required for the process of claims 1 to 5, in an extrusion press for the manufacture of a plastic wall or roof element (1) that comprises at least two panels which are arranged at a distance from each other and are interconnected by webs, the nozzle (11) having an interior profiled cavity (12) shaped in accordance with the wall or roof element (1) cross-section,
**characterised**
**in that** the tool (10) has additional coating orifices (15) which open so into the profiled cavity that the plastic material supplied through them is thinly applicable in several parallel stripes to the outer and/or inner surface of the extruded piece.

7. Tool in accordance with claim 6,
**characterised**
**in that** an end piece (14), fitted to the nozzle (11), is equipped with an interior cavity (12) that is shaped in accordance with the wall or roof element (1) and has juxtapposed coating orifices (15), which enter into the cavity and have distribution channels (16).

8. Tool in accordance with claim 6,
**characterised**
**in that** the coating orifices (15) and the distribution channels (16) are integral parts of the nozzle (11).

## Revendications

1. Procédé de fabrication d'un élément mural ou de plafond (1) en forme de plaque à partir d'une matière plastique boudinée, surtout transparente, composée d'au moins deux plaques (2, 3) espacées les unes des autres et reliées ensemble par des entretoises transversales (4), étant précisé que lors du boudinage la face extérieure et/ou intérieure (5, 8, 9) d'au moins une plaque (2, 3) est revêtue par co-extrusion d'un mince revêtement (6, 7) en forme de bande constitué d'une masse de matière plastique.
**caractérisé en ce que**
après mise en forme de l'élément mural ou de plafond (1), dans une filière d'extrusion (11), la masse de matière plastique destinée au revêtement (6, 7) mince en forme de bande est alimentée à travers une filière d'extrusion (11 ) ou une tête d'extrusion (14) et directement appliquée sur les faces, extérieure et intérieure (5, 8, 9), par l'intermédiaire de buses d'application du revêtement (15), étant précisé que la masse de matière plastique est colorée ou contient des particules absorbant la lumière UV ou la lumière infrarouge.

2. Procédé selon la revendication 1
**caractérisé en ce que**
lors du boudinage les faces des entretoises transversales (4) sont revêtues par co-extrusion d'un mince revêtement (6, 7) constitué d'une masse de matière plastique colorée ou absorbant la lumière UV ou la lumière infrarouge.

3. Procédé selon la revendication 1
**caractérisé en ce que**
lors du boudinage, les faces des entretoises transversales (4) sont mises en forme par co-extrusion à partir d'une masse de matière plastique colorée ou absorbant la lumière UV ou la lumière infrarouge.

4. Procédé selon la revendication 2 ou 3,
**caractérisé en ce que**
les revêtements (6, 7) en forme de bande, posés les uns à côté des autres en alternance, sont fabriqués à partir d'une masse de matière plastique colorée ou d'une masse de matière plastique absorbant la lumière UV ou la lumière infrarouge.

5. Procédé selon la revendication 2 ou 3,
**caractérisé en ce que**
les revêtements (6, 7) colorés en forme de bande sont disposés, respectivement décalés d'une largeur de bande, sur deux plaques (2, 3) reliées ensemble par des entretoises transversales (4).

6. Outil (10) pour l'application du procédé selon l'une des revendications 1 à 5, pour une presse à boudiner destinée à la fabrication d'un élément mural ou de plafond (1) en matière plastique composé d'au moins deux plaques espacées les unes des autres et reliées ensemble par des entretoises transversales, étant précisé que la filière d'extrusion (11) présente un profil creux (12) correspondant à la section de l'élément mural ou de plafond (1),
**caractérisé en ce que**
l'outil (10) est muni de buses supplémentaires d'application du revêtement (15) qui parviennent dans le profil creux de telle sorte que la masse de matière plastique alimentée soit applicable sous forme de mince couche en plusieurs bandes parallèles sur la face extérieure et/ou intérieure du boudin.

7. Outil selon la revendication 6,
**caractérisé en ce que**
une tête d'extrusion (14) montée devant la filière d'extrusion (11) est munie d'un profil creux (12) correspondant à l'élément mural ou de plafond (1) et de buses d'application du revêtement (15) et de conduits de répartition (16) situés les uns à côté des autres et se rejoignant dans le profil.

8. Outil selon la revendication 6,
**caractérisé en ce que**
les buses d'application du revêtement (15) et les conduits de répartition (16) font directement partie de la filière d'extrusion (11).
